# EUROPEAN PATENT APPLICATION

(11) **EP 4 450 140 A1**
(43) Date of publication of application: **23.10.2024**
(21) Application number: 22907313.5
(22) Date of filing: 07.12.2022
(51) Int. Cl.: A63H 29/22, A63H 29/00, H02K 7/14

(54) **SERVO MOTOR DEVICE AND MOVABLE MECHANISM**

(30) Priority: 14.12.2021 JP 2021202836
(71) Applicant: Futaba Corporation, Mobara-shi Chiba 297-8588 (JP)
(72) Inventor: MIYAMA, Yuki, Mobara-shi, Chiba 297-8588 (JP); DOBASHI, Yukihiro, Mobara-shi, Chiba 297-8588 (JP)
(74) Representative: Puschmann Borchert Kaiser Klettner Patentanwälte Partnerschaft mbB
(86) International application number: PCT/JP2022/045017
(87) International publication number: WO 2023/112786

(57) **Abstract**

A servo motor device that is easy to attach is provided. A servo motor device according to the present invention includes a main body including a motor, an output shaft protruding from the main body and rotatably held by the main body to output power of the motor, and a through hole penetrating the main body.

## Description

### Technical Field

The present invention relates to a technical field of a servo motor device including a main body including a motor and an output shaft protruding from the main body and rotatably held by the main body to output power of the motor, and a movable mechanism including the servo motor device and a driven portion driven by the power of the motor included in the servo motor device.

### Background Art

For example, a servo motor device that can be used as an actuator in a steering mechanism of a model car or a joint portion of a robot is known as disclosed in Patent Document 1 and Patent Document 2 below. The servo motor device including a main body including a motor and an output shaft protruding from the main body and rotatably held by the main body to output power of the motor.

### Prior Art Documents

### Patent Document

Patent Document 1 : JP2001029669 (A)
Patent Document 2 : JP2006043848 (A)

### Summary of the Invention

### Problems to be Solved by the Invention

The servo motor device can be applied to various types of movable mechanisms, such as the above-mentioned steering mechanism and joint portions of robots. When considering application to a movable mechanism, it is desired that the servo motor device has greater ease of attachment, such as higher flexibility in installation with other parts.

The present invention has been made in view of the above circumstances, and it is an object of the present invention to provide a servo motor device that is easy to attach and a movable mechanism equipped with the servo motor device.

### Means for Solving the Problems.

A servo motor device according to the present invention is a servo motor device that includes a main body including a motor, an output shaft protruding from the main body and rotatably held by the main body to output power of the motor, and a through hole penetrating the main body.

Because the above-described through hole is provided, the attachment method using the through hole can be adopted as the attachment method between the servo motor device and another component, when the servo motor device is applied as an actuator in various kinds of movable mechanisms such as, for example, a steering mechanism of a model car or a joint portion of a robot.

A movable mechanism according to the present invention is a movable mechanism that includes a servo motor device; and a driven portion, wherein the servo motor device includes: a main body including a motor; an output shaft protruding from the main body and rotatably held by the main body to output power of the motor; and a through hole penetrating the main body, and wherein the driven portion is driven based on the power of the motor.

With such a movable mechanism, the same effects as those described above can be obtained for the servo motor device.

### Advantageous Effects of the Invention

According to the present invention, a servo motor device that is easy to attach and a movable mechanism equipped with the servo motor device are can be provided.

### Brief Description of the Drawings

Fig. 1 is a block diagram for explaining the outline of the electrical configuration of a radio control system of an embodiment of the present invention.
Fig. 2 is a diagram illustrating an example of the configuration of a steering mechanism using a link mechanism.
Figs. 3A, 3B and 3C is an explanatory diagram illustrating the dependence of a rotation angle change amount of a steering wheel on the steering angle.
Fig. 4 is a perspective view of the exterior of a model car according to an embodiment, mainly illustrating the vicinity of the steering mechanism in the model car.
Figs. 5A and 5B is an explanatory diagram illustrating the external configuration of a servo motor device of an embodiment.
Fig. 6 is an explanatory diagram of internal component arrangement of the servo motor device of the embodiment.
Figs. 7A and 7B is an explanatory diagram of an attachment mechanism of the steering wheel according to the embodiment.
Figs. 8A and 8B is a diagram illustrating the vicinity of the left steering wheel when driving straight.
Figs. 9A and 9B is a diagram illustrating the vicinity of the left steering wheel when steering to the right.
Fig. 10A and 10B is an explanatory diagram of the installation of the steering wheel using a wheel hub portion.
Fig. 11A and 11B is an explanatory diagram of the effect obtained by shortening the scrub radius.
Fig. 12A and 12B is an explanatory diagram of an input damping mechanism included in a model car according to an embodiment.
Fig. 13A and 13B is likewise an explanatory diagram of the input damping mechanism included in the model car according to the embodiment.
Fig. 14A and 14B is an explanatory diagram of a steering mechanism as a modified embodiment.
Fig. 15 is a perspective view for explaining another configuration example of the main body.
Fig. 16A and 16B is an explanatory diagram of a mounting member attached to a servo motor device as another configuration example.
Fig. 17 is a perspective view for explaining yet another configuration example of the main body.

### Modes for Carrying Out the Invention

Hereinafter, an embodiment of the present invention will be explained in the following order.
<1. Summary of configuration of radio control system>
<2. Movable mechanism as embodiment>
<3. Input damping mechanism>
<4. Modified embodiment>
<5. Summary of embodiment>
<6. Another configuration example of main body>

In the following description, a steering mechanism of a model car is explained as an example of a movable mechanism according to the present invention. Further, a steering servo motor used as a driving source for rotating a steering wheel in a steering angle direction in a steering mechanism of a model car is explained as an example of a servo motor device according to the present invention.

### <1. Summary of configuration of radio control system>

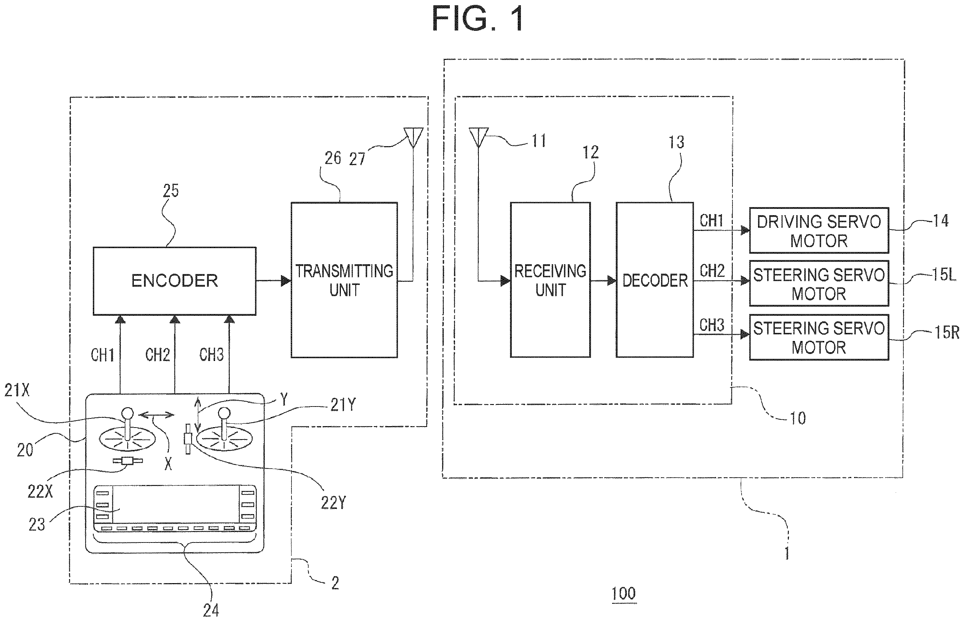

Fig. 1 is a block diagram for explaining the outline of the electrical configuration of a radio control system 100 of an embodiment.

The radio control system 100 includes at least a model car 1 as a controlled object and a transmitter 2 that functions as a controller for controlling the model car 1 wirelessly.

Although not illustrated, in this example, the model car 1 is configured as a vehicle with a total of four wheels, one pair each at the front and rear, the pair of left and right front wheels are provided as steering wheels W for turning the model car 1, and the pair of left and right rear wheels are provided as steering wheels for driving the model car 1.

Hereinafter, the steering wheel W on the left side is referred to as a "steering wheel WL", and the steering wheel W on the right side is referred to as a "steering wheel WR".

The model car 1 is provided with a receiver 10 configured to receive a steering signal from transmitter 2 and a driving servo motor 14 and steering servo motors 15 as servo motors for accelerating or decelerating and steering.

The model car 1 according to the present embodiment is provided with, as the steering servo motors 15, a steering servo motor 15L for rotating the left steering wheel WL in the steering angle direction and a steering servo motor 15R for rotating the right steering wheel WR in the steering angle direction.

The driving servo motor 14 is a servo motor for adjusting a carburetor in an engine (not illustrated) installed in the model car 1. The model car 1 according to the present embodiment is an engine car, and the rear wheels are driven using the engine as the driving source. The acceleration (accelerator) and deceleration (brake) of the model car 1 can be controlled by controlling the rotation of this driving servo motor 14.

It should be noted that the model car 1 can also be configured to drive the wheels using a motor as the driving source. In that case, a speed controller (ESC) for controlling the motor for driving is to be provided.

Here, details of the receiver 10 in the model car 1 is described later.

The transmitter 2 modulates, into a radio frequency, the steering signal for wirelessly controlling the model car 1 and transmits the modulated steering signal as radio waves. As illustrated, the transmitter 2 includes an interface unit 20, an encoder 25, a transmitting unit 26, and an antenna 27.

The interface unit 20 performs interface operations for the user, such as accepting operation input from the user as a pilot and presenting various information to the user. The interface unit 20 is provided with two operation levers 21, two trim switches 22, a display unit 23, and a setting operation unit 24.

The operation lever 21 includes an operation lever 21X for controlling the steering of the model car 1, and an operation lever 21Y for controlling acceleration and deceleration.

In the example of Fig. 1, the direction of the steering wheel W can be controlled by operating the operation lever 21X of the steering in the direction indicated by an arrow X (horizontal direction on the page), and acceleration and deceleration of the model car 1 can be controlled by operating the other operation lever 21Y in the direction indicated by an arrow Y (vertical direction on the page).

It should be noted that the operating elements for steering and acceleration/deceleration are not limited to the illustrated lever-shaped operating elements, and it is also possible to use other forms of operating elements, such as wheel-shaped operating elements.

In this case, in the present embodiment, the steering servo motors 15 of the model car 1 are separately provided for the left and right steering wheels W as explained above, and therefore, in response to the operation of the operation lever 21X, a signal for driving the steering servo motor 15L on the left side and a signal for driving the steering servo motor 15R on the right side are generated separately.

In the present embodiment, the operation lever 21X is configured to output a control signal for each of the steering servo motors 15L, 15R by changing the resistance values of a variable resistor according to the amount of operation (displacement).

The operation lever 21Y is also configured to output a control signal for the driving servo motor 14 by changing the resistance value of a variable resistor according to the amount of operation.

In the transmitter 2, control signals for a total of three channels for the steering servo motor 15L, the steering servo motor 15R, and the driving servo motor 14 are generated by the operation levers 21X, 21Y as described above.

In the figure, the control signals of these channels generated based on the operation of the operation lever 21X and the operation lever 21Y are indicated as signals CH1, CH2, and CH3. In this case, it is assumed that the signal CH1 is a control signal for the driving servo motor 14, and the signals CH2, CH3 are control signals for the steering servo motors 15L, 15R, respectively.

As illustrated in the figure, these signals CH1, CH2, and CH3 are input to the encoder 25.

It should be noted that the above channel assignment is just an example for explanation, and the combination of channels and signals can be changed as appropriate, such as setting CH1 as the steering signal (for the left and right) and CH2 as the driving signal.

Further, the interface unit 20 is provided with a trim switch 22 for adjusting the resistance value of the variable resistor (the value of the control signal of the servo motor) with respect to the neutral position when the operation lever 21 is not operated. This trim switch 22 is provided for each of the operation levers 21X, 21Y in the present embodiment (see 22X, 22Y in the figure).

It should be noted that the resistance value of the variable resistor with respect to the above-mentioned neutral position can also be configured to be controlled by an operation via a setting operation unit 24, described later.

Furthermore, the interface unit 20 is provided with a display unit 23 configured with, for example, a liquid crystal display (LCD) or an organic electro-luminescence (EL) display. Through a setting screen displayed on the display unit 23, the user is able to perform various settings related to the operation of the model car 1 using various operating elements provided in the setting operation unit 24. For example, as settings related to steering, the maximum turning angle of the steering wheel W and the like can be set. In addition, available settings include a setting as to whether to perform control to change the toe angle of the steering wheels WL, WR (control to improve straight line stability) in response to the brake operation or accelerator operation with the operation lever 21Y. In this case, the toe angle adjustment is achieved by superimposing a toe angle adjustment signal on the control signals of the steering servo motors 15L, 15R.

In the transmitter 2, the encoder 25 converts the signals CH1, CH2, and CH3 of the respective channels received from the interface unit 20 into pulse widths, and multiplexes and output these signals CH1, CH2, and CH3 with time-division multiplexing at a predetermined frame period.

The time-division multiplexed signals CH1, CH2, and CH3 are input to the transmitting unit 26, and the transmitting unit 26 performs AM modulation (amplitude modulation) or FM modulation (frequency modulation FM) on the signals CH1, CH2, and CH3 which have been multiplexed with the time division multiplexing, and transmits, as steering signals, the modulated signals from the antenna 27 in radio waves.

In the model car 1, the receiver 10 includes an antenna 11, a receiving unit 12, and a decoder 13.

The receiver 10 receives, via the antenna 11, the steering signal transmitted from the transmitter 2, demodulates it, and outputs the demodulated reception signal to the decoder 13.

The decoder 13 separates the steering signal received by the receiver 10 into signals CH1, CH2, and CH3 of the respective channels, and sends the separated signals CH1, CH2, and CH3 to the driving servo motor 14 and the corresponding servo motors of the steering servo motors 15L, 15R. Specifically, in the present embodiment, the signal CH1 is output to the driving servo motor 14, the signal CH2 is output to the steering servo motor 15L, and the signal CH3 is output to the steering servo motor 15R.

As a result, the steering servo motors 15L, 15R are each driven and controlled according to the operation of the operation lever 21X, and the model car 1 is steered according to the operation of the operation lever 21X.

Further, the driving servo motor 14 is driven and controlled in accordance with the operation of the operation lever 21Y, so that the model car 1 is accelerated or decelerated in accordance with the operation of the operation lever 21Y.

### <2. Movable mechanism as embodiment>

In this case, with respect to the steering mechanism of the model car 1, It is conceivable to adopt a configuration, as in Patent Document 1 mentioned above, in which the steering servo motor 15 is installed on the vehicle body (chassis) side, and the rotational driving force from the steering servo motor 15 is transferred to the steering wheel side via the link mechanism of the steering.

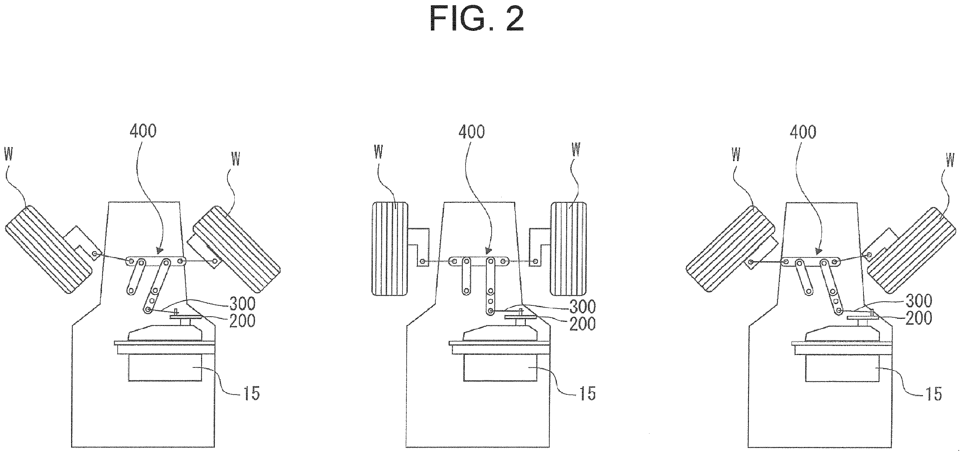

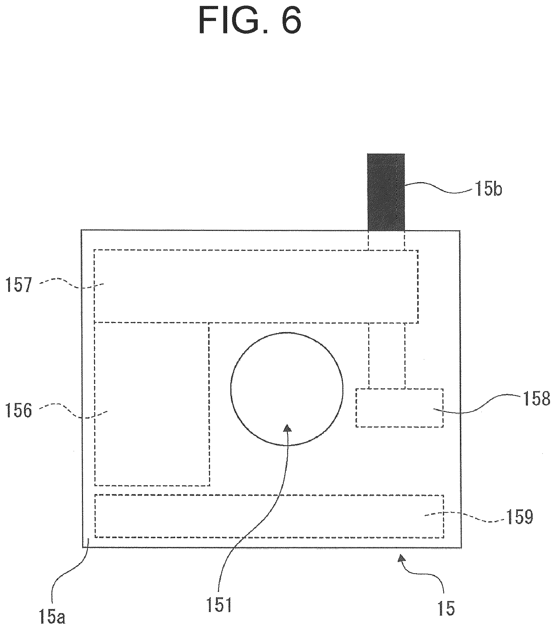

Fig. 2 is a diagram illustrating, as an example of a steering mechanism using such a link mechanism 400, an example of a configuration disclosed in Fig. 6 of Patent Document 1.

As can be understood with reference to Fig. 2, the rotational driving force from the steering servo motor 15 is converted into horizontal translational movement via a servo horn 200 and a link mechanism 400, and accordingly, the link mechanism 400 rotates the left and right steering wheels W in the steering angle direction.

However, in the link mechanism 400 as above, backlash is caused by a slight gap between members constituting the link mechanism 400; at connection portions between the link mechanism 400, the servo horn 200, a rod 300 included in the link mechanism 400, and the servo motor 15; or at connection portions between the link mechanism 400 and the steering wheels W, and this connection backlash causes a decrease in the accuracy of steering control.

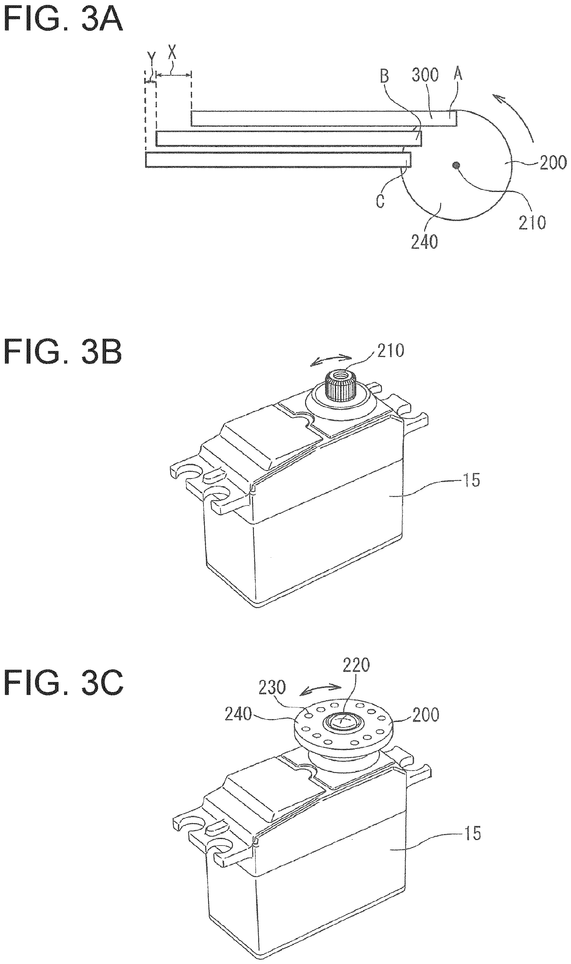

In addition, due to that nature of the link mechanism 400 described above that converts the rotational movement of the steering servo motor 15 into horizontal translational movement to drive the steering wheel W, the rotation angle change amount of the steering wheel W in response to the change in the rotation angle of the output shaft of the steering servo motor 15 changes depending on the steering angle, and this is another reason to reduce the accuracy of steering control. Fig. 3 is an explanatory diagram illustrating the dependence of a rotation angle change amount of a steering wheel W on the steering angle.

Fig. 3B is a schematic perspective view of the steering servo motor 15, in which the output shaft 210 can be rotated in the direction indicated by the arrow by the rotational power generated by the motor 156 in the steering servo motor 15. Fig. 3C is a schematic perspective view of the steering servo motor 15 with the servo horn 200 being fixed to the output shaft 210 with a screw 220. The rod 300 can be attached to any of multiple holes 230 in the servo horn 200. The rod 300 is a component constituting the link mechanism 400, and is a component that connects to the servo horn 200. The servo horn 200 has a mechanism to be able to rotate in the direction indicated by the arrow according to rotation of the output shaft 210.

Fig. 3A is a schematic diagram of a mounting surface 240, for the rod 300, of the servo horn 200 attached to the steering servo motor 15 as seen from the front, in which the rod 300 is attached, and the holes 230 and the link mechanism 400 other than the rod 300 are omitted. When the output shaft 210 of the steering servo motor 15 rotates, the link mechanism 400 and the steering wheel W operate in conjunction with the rotation. The rotational motion of the output shaft 210 is converted into linear motion via the servo horn 200 and the link mechanism 400, and accordingly, the steering wheel W operates (Figs. 2, 3).

Also, although three rods 300 are illustrated in Fig. 3A, one rod 300 is actually attached, and Fig. 3A illustrates a case where rod 300 moves from a position A to a position B and then to a position C.

Let X denote the amount of change in the rod 300 on the driving unit side when the rod 300 is connected to the position of reference symbol A of the servo horn 200, the steering servo motor 15 is driven to rotate the servo horn 200 in the direction indicated by the arrow, and the rod 300 moves from reference symbol A to reference symbol B. Likewise, let Y denote the amount of change in the rod 300 on the driving unit side when the rod 300 moves from reference symbol B to reference symbol C. As can be seen from the amounts of change X and Y, the amount of change in the rod 300 of the driving unit side is not equal to the change in the rotation angle of the output shaft 210. In the case of Fig. 3A, the rotation angle change amount of the steering wheel W, i.e., the driving unit, in response to the rotation angle change of the output shaft 210 is greater when the rod 300 moves from reference symbol A to reference symbol B than when the rod 300 moves from reference symbol B to reference symbol C.

Specifically, as can be understood from Fig. 3, in a case where the link mechanism 400 as illustrated in Fig. 2 is used, the distance of movement of the rod 300 on the servo horn 200 due to the rotational movement of the output shaft 210 does not correspond to the distance of movement of the rod 300 converted to linear movement. Therefore, in a region where the steering angle is small, the rotation angle change amount of the steering wheel W in response to the rotation angle change of the output shaft 210 of the steering servo motor 15 is relatively large, whereas in a region where the steering angle is large, the rotation angle change amount of the steering wheel W in response to the rotation angle change of the output shaft 210 of the steering servo motor 15 is relatively small. Accordingly, the rotation angle change amount of the steering wheel W changes depending on the steering angle.

Therefore, in view of the above issues, this embodiment adopts, as the steering mechanism of the model car 1, a configuration in which the steering servo motor 15 is arranged between the steering wheel W and the arm portion extending from the vehicle body side, i.e., adopts what is termed as an in-wheel servo configuration.

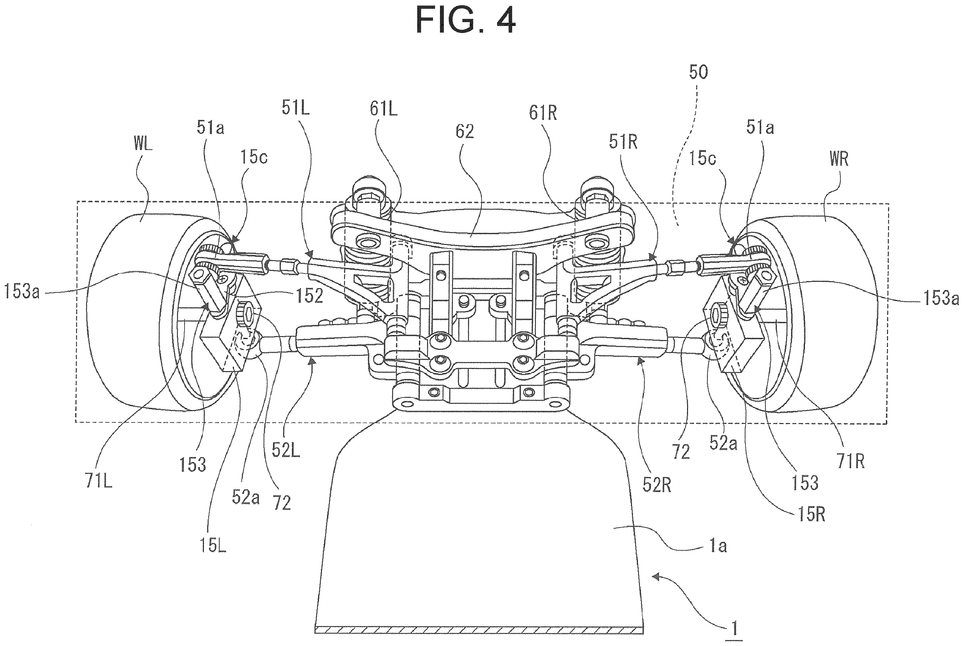

With reference to Fig. 4 to Fig. 9, a steering mechanism 50 provided in the model car 1 of an embodiment is hereinafter explained.

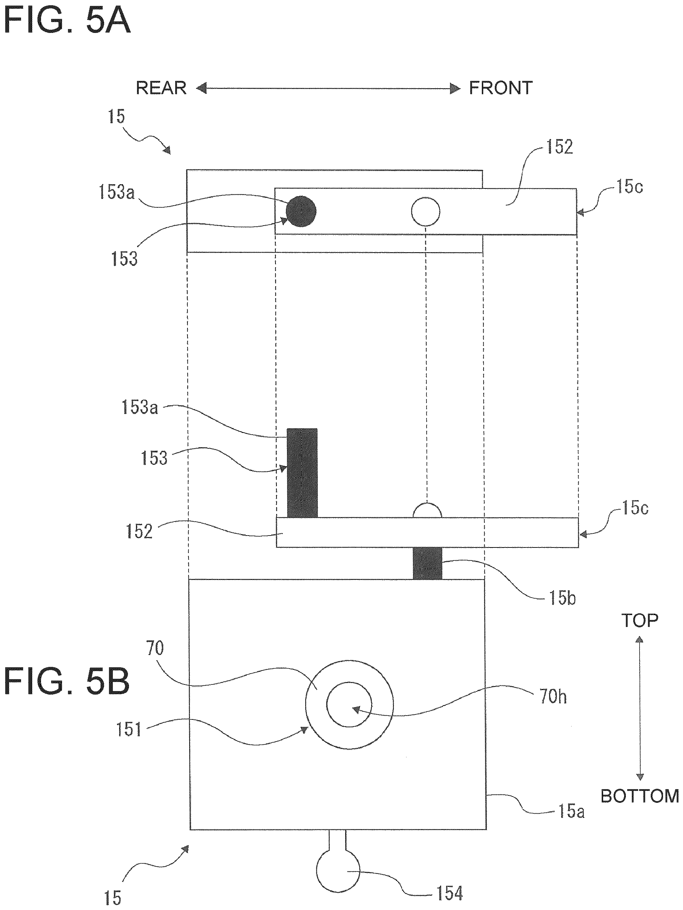

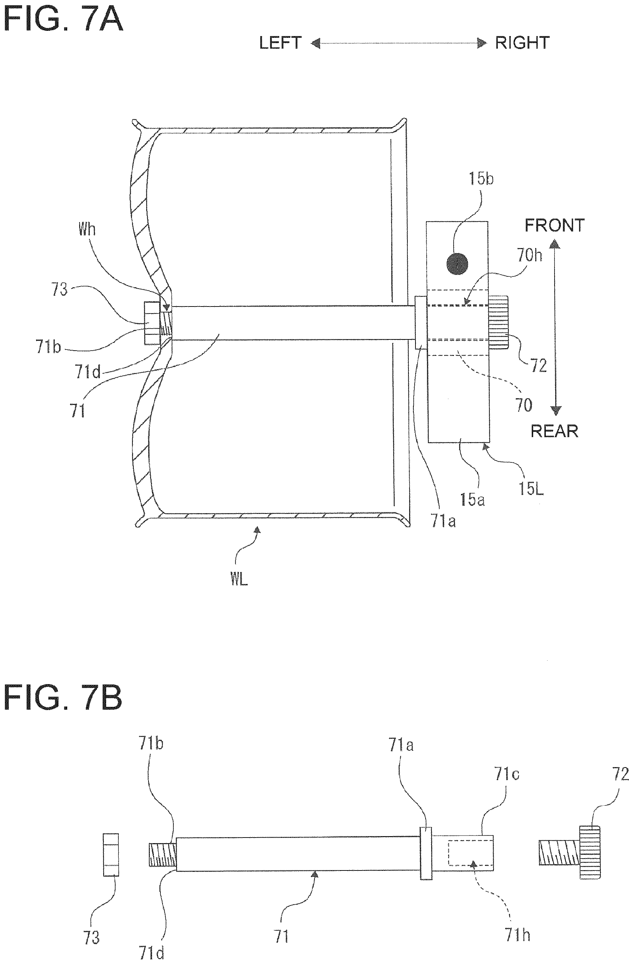

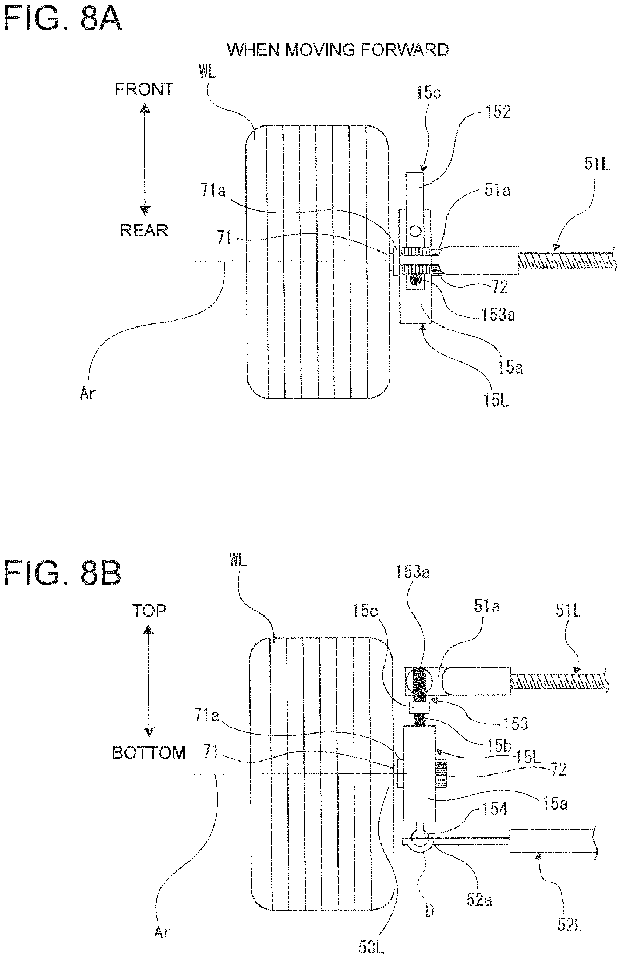

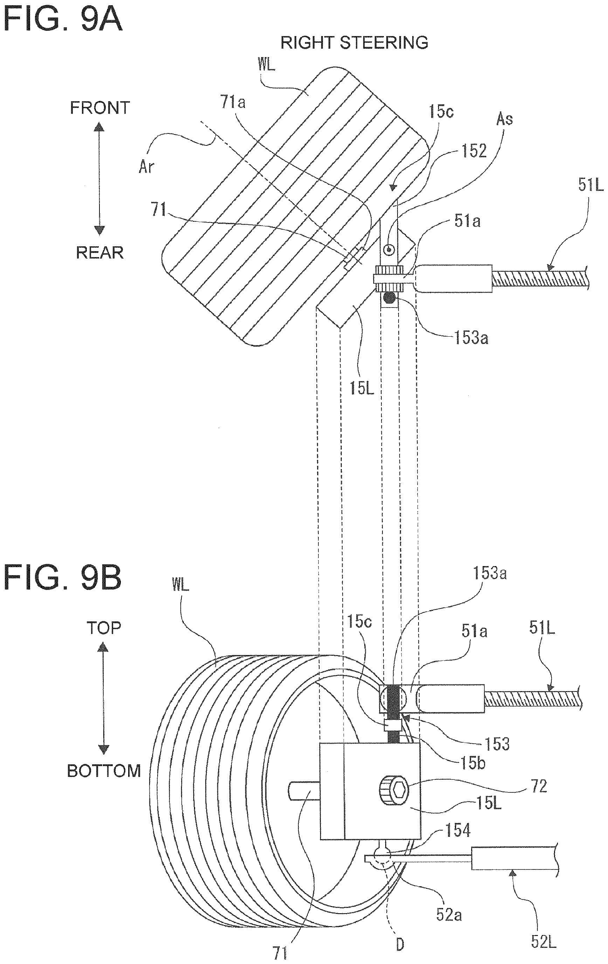

Fig. 4 is a perspective view of the exterior of the model car 1, mainly illustrating the vicinity of the steering mechanism 50 in the model car 1. Fig. 5 is an explanatory diagram illustrating the external configuration of the servo motor 15. Fig. 6 is an explanatory diagram of internal component arrangement of the steering servo motor 15. Fig. 7 is an explanatory diagram of an attachment mechanism of the steering wheel. Figs. 8, 9 are diagrams illustrating the vicinity of the left steering wheel WL when driving straight and when steering to the right.

In Fig. 4, the wiring for the steering servo motor 15 and the illustration of the receiver 10 and the driving servo motor 14 are omitted.

In Fig. 5, Fig. 5A and Fig. 5B are the top and side views, respectively, of the steering servo motor 15. Fig. 6 is a side view of the steering servo motor 15. Furthermore, in Fig. 7, Fig. 7A is a top view of the attachment mechanism, and Fig. 7B is an explanatory diagram of various members used in the attachment mechanism. In Fig. 8, Fig. 8A and Fig. 8B are a top view and a rear view (as seen from the rear side of the vehicle), respectively, of the vicinity of the left steering wheel WL.

The steering mechanism 50 is arranged near the front end of a chassis 1a of the model car 1 (see Fig. 4).

In the present embodiment, the steering mechanism 50 has a bilaterally symmetrical configuration, and includes, on each of the left side and the right side, at least an upper arm 51, a lower arm 52, a steering servo motor 15, a rotation shaft portion 71, and a steering wheel W. In the following explanation, when distinguishing between the left and right components of the steering mechanism 50, "L" is attached to the end of a reference symbol for a component on the left, and "R" is attached to the end of a reference symbol for a component on the right.

Here, Fig. 4 illustrates shock absorbers 61 (61L and 61R) and a shock tower 62 as suspension-related components of the model car 1, but these components are explained later.

The upper arm 51 and the lower arm 52 each function as an arm portion for supporting the steering wheel W from the chassis 1a, and are arranged apart from each other in the vertical direction. The upper arm 51 and the lower arm 52 have their roots attached to the chassis 1a so as to extend toward the outside of the vehicle body. Portions near the tips (portions farthest from the chassis 1a) are formed as a tip portions 51a and a tip portions 52a.

In the present embodiment, the steering servo motor 15 is arranged between the tip portion 51a of the upper arm 51 and the tip portion 52a of the lower arm 52, and the steering wheel W is connected to the steering servo motor 15 via the rotation shaft portion 71.

The steering servo motor 15 includes a main body 15a and an output shaft 15b (see Fig. 5). The output shaft 15b protrudes from the main body 15a and outputs the power of the motor. In other words, the output shaft 15b functions as an output shaft for the rotational driving force generated by the motor. Inside the main body 15a, a motor (a motor 156 described later) is provided, and the main body 15a is a portion that rotatably holds the output shaft 15b. As illustrated in the figure, the main body 15a is formed into a plate shape in the present embodiment, and the output shaft 15b protrudes upward from the upper surface of the main body 15a.

It should be noted that the directions here are based on the directions when attached to the model car 1.

The output shaft 15b protrudes from any one of the four surfaces parallel to the thickness direction of the main body 15a among the six surfaces of the plate-shaped main body 15a. In the steering mechanism 50 according to the present embodiment, the steering servo motor 15 is arranged such that the output shaft 15b projects upward. In other words, the steering servo motor 15 is arranged such that two main surfaces perpendicular to the thickness direction of the main body 15a are parallel to the vertical direction.

Here, the steering servo motor 15 has a through hole 151 that passes through the main body 15a, and has a bearing 70 inside this through hole 151 (see Fig. 5B).

As illustrated in Fig. 6, the through hole 151 is formed as a hole portion that penetrates approximately the center of the main surface of the main body 15a in the thickness direction of the main body 15a. In the present embodiment, the through hole 151 is formed as a hole portion in a substantially cylindrical shape.

As illustrated in Fig. 6, the main body 15a includes, in its inside, the motor 156, a reduction mechanism 157 that transmits the rotational power of the motor 156 to the output shaft 15b and reduces the rotational speed of the output shaft 15b relative to the rotational speed of the motor 156, an angle detection unit 158 using, for example, a potentiometer (variable resistor), to detect the rotation angle of the output shaft 15b, and a circuit board 159 on which the motor 156 drive circuit and other electronic components are mounted.

The through hole 151 is formed approximately at the center of the main surface of the main body 15a, avoiding components arranged inside the main body 15a, such as the motor 156, the reduction mechanism 157, the angle detection unit 158, and the circuit board 159.

In other words, the components such as the motor 156, the reduction mechanism 157, the angle detection unit 158, and the circuit board 159 are arranged inside the main body 15a so as to avoid the position approximately at the center of the main surface of main body 15a so that the through hole 151 can be formed approximately at the center of the main surface of main body 15a.

The bearing 70 is configured as a bearing such as a rolling bearing or a sliding bearing, and is fitted into the through hole 151 of the main body 15a.

Inside the inner ring of the bearing 70, an inner hole 70h is formed as a through hole in a substantially cylindrical shape. This inner hole 70h functions as a rotation shaft portion insertion hole through which the rotation shaft portion 71 of the steering wheel W is inserted.

Here, when the bearing 70 is fitted into the through hole 151 as described above, the through hole 151 cannot be visually observed. However, in the configuration in which the bearing 70 is embedded in the main body 15a as illustrated in FIG. 5B, it is clear that the through hole 151 for arranging the bearing 70 is formed in the main body 15a.

Therefore, in the configuration where the bearing 70 is embedded in the main body 15a as illustrated in Fig. 5B, it should be understood that the through hole 151 for arranging the bearing 70 is formed in the main body 15a.

With reference to Fig. 7, the attachment mechanism of the steering wheel W to the steering servo motor 15 is explained.

In Fig. 7, only the left attachment mechanism of the left and right steering wheels WL and WR is explained as a representative. Since the attachment mechanism on the right side is bilaterally symmetrical to the attachment mechanism on the left side, explanations thereabout using illustrations are omitted.

Furthermore, in Fig. 7A, the steering wheel W (WL) is illustrated as a cut model illustrating only the wheel portion, with the upper half being cut off.

The rotation shaft portion 71 is a rotation shaft portion of the steering wheel W, and is formed into a rod shape (see Fig. 7B). Specifically, in the present embodiment, the rotation shaft portion 71 is formed as a member in a substantially cylindrical shape.

The rotation shaft portion 71 is used as a member for connecting the main body 15a of the steering servo motor 15 and the steering wheel W.

An end of the rotation shaft portion 71 connected to the steering wheel W is defined as a tip portion 71b. An end portion connected to the main body 15a is defined as a root portion 71c.

The tip portion 71b is formed with a thread on which a nut 73 is screwed to fasten the steering wheel W. The diameter of the tip portion 71b on which the thread is thus formed is smaller than that of the root portion of the tip portion 71b of the rotation shaft portion 71. That is, the rotation shaft portion 71 has a stepped portion 71d formed, due a difference in diameter from the tip portion 71b, at a boundary portion between the tip portion 71b and a portion closer to the root side than the tip portion 71b.

In addition, the rotation shaft portion 71 has a flange portion 71a formed at a position closer to the tip side than the root portion 71c and closer to the root side than the tip portion 71b.

The flange portion 71a functions as a position regulating portion to prevent the rotation shaft portion 71 from being displaced toward the chassis 1a of the model car when the root portion 71c of the rotation shaft portion 71 is inserted into the inner hole 70h of the bearing 70. The flange portion 71a is formed at a position offset from the root end of the rotation shaft portion 71 toward the distal end by an amount corresponding to the thickness of the main body 15a.

The root portion 71c of the rotation shaft portion 71 is formed with a hole portion 71h that is concave from the root end of the rotation shaft portion 71 toward the tip side. This hole portion 71h is a hole portion for fastening a bolt 72 for fixing the root portion 71c of the rotation shaft portion 71 to the main body 15a of the steering servo motor 15. A thread groove is formed on the inner peripheral wall of this hole portion 71h.

The steering wheel W is attached to the main body 15a using the rotation shaft portion 71, the bolt 72, and the nut 73 configured as described above.

Specifically, with the tip portion 71b of the rotation shaft portion 71 inserted into a center hole Wh of the steering wheel W, the nut 73 is screwed onto the tip portion 71b, thereby fixing the steering wheel W at the tip portion 71b. In this case, the diameter of the stepped portion 71d formed on the rotation shaft portion 71 is larger than the center hole Wh, so that the stepped portion 71d comes into contact with the outer periphery of the center hole Wh of the steering wheel W, and accordingly, the stepped portion 71d functions as a flange portion to prevent the rotation shaft portion 71 (and the steering wheel W) from being displaced in a direction approaching the steering servo motor 15.

Further, the root portion 71c of the rotation shaft portion 71 is inserted into the inner hole 70h of the bearing 70 of the main body 15a, and in this state, the bolt 72 is screwed into the hole portion 71h of the root portion 71c. In this case, the diameter of the head of the bolt 72 is larger than that of the root portion 71c (and the inner hole 70h of the bearing 70). In other words, the bolt 72 has a portion with a larger diameter than the root portion 71c (and the inner hole 70h of the bearing 70).

By screwing the bolt 72 into the hole portion 71h of the root portion 71c as described above, the root portion 71c of the rotation shaft portion 71 is fixed to the side of the main body 15a. In this case, the root portion 71c is inserted into the inner hole 70h of the bearing 70, and accordingly, the rotation shaft portion 71 and the steering wheel W fixed to the tip portion 71b thereof is rotatably held by the main body 15a.

In addition, the head of the bolt 72 has a larger diameter than the hole portion 71h of the root portion 71c and the inner hole 70h of the bearing 70 when the bolt 72 is screwed into the hole portion 71h of the root portion 71c as described above, so that the head of the bolt 72 comes into contact with a portion of the main body 15a that is closer to the outer periphery than the portion where the inner hole 70h is formed. Specifically, in the present embodiment, the head of the bolt 72 comes into contact with the inner ring of the bearing 70.

Accordingly, the rotation shaft portion 71 and the steering wheel W fixed thereto are prevented from being displaced in the direction away from the steering servo motor 15, the steering wheel W as well as the rotation shaft portion 71 can be prevented from detaching from the model car 1.

It should be noted that the bolt 72 is an example of a "cap member" set forth in the claims. The locking method of the cap member with the rotation shaft portion 71 is not limited to the locking method using the threads and thread grooves exemplified above, but other locking methods may also be adopted.

Furthermore, when the bolt 72 is screwed into the hole portion 71h of the root portion 71c as described above, the flange portion 71a of the rotation shaft portion 71 comes into contact with a portion of the main body 15a that on the outer periphery side that the portion where the inner hole 70h is formed. Specifically, in the present embodiment, the flange portion 71a comes into contact with the inner ring of the bearing 70. The flange portion 71a as described above realizes position regulation of the rotation shaft portion 71 in the axial direction so as to prevent the rotation shaft portion 71 and the steering wheel W fixed thereto from being displaced toward the chassis 1a.

Because the above-mentioned attachment mechanism is adopted, in the present embodiment, the same steering servo motor 15 can be attached to either the left or right steering wheel W.

Next, connection with the arm portion is hereinafter explained.

As illustrated in Fig. 5, a connection portion 15c for connecting to the upper arm 51 is attached to the tip portion of the output shaft 15b. The connection portion 15c includes: a plate-shaped portion 152 arranged parallel to the plane perpendicular to output shaft 15b; and a pole portion 153 extending from the end of the plate-shaped portion 152 in a direction parallel to the output shaft 15b (upward in the present embodiment).

The plate-shaped portion 152 has a substantially rectangular shape in a top view, and the center of the plate-shaped portion 152 in the longitudinal direction is connected to the tip portion of the output shaft 15b.

The pole portion 153 is located on one end side of both ends of the plate-shaped portion 152 in the longitudinal direction. A portion near the tip of the pole portion 153 is formed as a tip portion 153a.

Furthermore, a spherical joint 154 is formed on the lower surface of the main body 15a. The spherical joint 154 is formed to protrude downward from the lower surface of the main body 15a, and has a tip portion (that is, a lower end portion) in the protrusion direction that is approximately spherical.

A specific connection form between the upper arm 51, the lower arm 52 and the steering servo motor 15 is explained with reference to Fig. 8 and Fig. 9. In the following explanation, the configuration on the left side of the steering mechanism 50 is explained as a representative. Since the configuration on the right side is bilaterally symmetrical to the configuration on the left side, explanations thereabout using illustrations are omitted.

Furthermore, in Fig. 8 and Fig. 9 explained above, a wheel rotation axis Ar is illustrated. The wheel rotation axis Ar means the rotation axis when the wheels rotate as the model car 1 travels. The wheel rotation axis Ar can be expressed as an axis passing through the radial center of the wheel.

First, in the present embodiment, the main body 15a of the steering servo motor 15L and the plate-shaped portion 152 of the connection portion 15c are each oriented in a direction substantially parallel to the front-rear direction when the vehicle is traveling straight as illustrated in Fig. 8. Specifically, when traveling straight, the left and right-side surfaces of the main body 15a and the longitudinal direction of the plate-shaped portion 152 are substantially parallel to the front-rear direction. In the present embodiment, the orientation of the plate-shaped portion 152 when traveling straight is such that the pole portion 153 is positioned on the rear end side as illustrated in the figure.

In the present embodiment, the tip portion 153a of the pole portion 153 of the connection portion 15c is connected to the tip portion 51a of the upper arm 51L such that the pole portion 153 does not rotate. As a result, the output shaft 15b of the steering servo motor 15L, which is connected to the pole portion 153 via the plate-shaped portion 152, is unrotatably supported by the upper arm 51L.

On the other hand, as illustrated in Fig. 8B, the spherical joint 154 provided on the lower surface of the main body 15a of the steering servo motor 15L is connected to the tip portion 52a of the lower arm 52L. Specifically, a recess D is formed in the tip portion 52a of the lower arm 52L to allow the spherical portion of spherical joint 154 to be fitted therein in a slidable manner in the direction along the spherical surface, and the spherical joint 154 is connected to the lower arm 52L via this recess D.

As a result, the main body 15a of the steering servo motor 15L is supported by the lower arm 52L so that it can freely rotate around an axis parallel to the steering rotation axis (an axis parallel to the output shaft 15b).

In this case, the steering servo motor 15L generates driving force that rotates the output shaft 15b when a driving signal is applied, and as described above, the output shaft 15b is unrotatably supported by the upper arm 51L, and the main body 15a is rotatably supported by the lower arm 52L, so that in response to generation of such rotation driving force, as illustrated in an example of right turn in Fig. 9, the main body 15a rotates around an axis parallel to the steering rotation axis. Accordingly, in response to rotation of the main body 15a, the steering wheel WL connected to the side surface of the main body 15a via a wheel hub portion 53 also rotates around the axis parallel to the steering rotation axis.

As can be understood with reference to Fig. 8 and Fig. 9, the steering rotation axis of the steering mechanism 50 according to the present embodiment is an axis indicated as "As" in Fig. 9A, i.e., the rotation center axis of the output shaft 15b.

Hereinafter, the steering rotation axis is denoted with the reference symbol "As".

In the above configuration, the spherical joint 154 formed on the main body 15a is connected to the lower arm 52, and the pole portion 153 of the connection portion 15c is connected to the upper arm 51, but in order to realize the configuration in which the steering wheel W rotates as the main body 15a rotates as described above, conversely, the spherical joint 154 may be connected to the upper arm 51, and the pole portion 153 may be connected to the lower arm 52. In this case, the recess D for receiving the spherical joint 154 is formed on the tip portion 51a of the upper arm 51, and the tip portion 153a is connected to the tip portion 52a of the lower arm 52 such that the pole portion 153 does not rotate. In other words, conversely to the afore-mentioned case, the output shaft 15b is held unrotatably by the lower arm 52, and the main body 15a is supported by the upper arm 51 so that it can freely rotate around the output shaft 15b as the central axis.

As understood from this point, in order to realize the operation in which the steering wheel W rotates as the main body 15a rotates, the steering mechanism 50 only needs to be configured as follows: the output shaft 15b is unrotatably supported by either one of the upper arm 51 and the lower arm 52, and the main body 15a is supported by the other of the upper arm 51 and the lower arm 52 so that it can freely rotate around the output shaft 15b as the central axis. In other words, the output shaft 15b is supported unrotatably by either one of the upper arm 51 and the lower arm 52, and the main body 15a is supported by the other of the upper arm 51 and the lower arm 52, i.e., by the arm portion side that is not supporting the output shaft 15b, so that it can freely rotate around the output shaft 15b as the central axis.

As can be understood from the explanations of Fig. 4 to Fig. 9, the steering mechanism 50 according to the present embodiment adopts a configuration as an in-wheel servo.

By adopting the configuration as the in-wheel servo, it is possible to eliminate the need for the link mechanism of the steering that is required by steering servo motors provided on the vehicle body side as in a conventional example, and it becomes possible to synchronize the rotation angle of the steering servo motor and the rotation angle of the steering wheel.

Because the need for a steering link mechanism is eliminated, it is possible to alleviate a decrease in the accuracy of steering control caused by a connection backlash in the link mechanism. Furthermore, because the need for a link mechanism is eliminated, it is possible to prevent the rotation angle of the steering wheel from changing depending on the steering angle. Therefore, the accuracy of steering control can be improved in these aspects.

In addition, in the steering mechanism 50 of the present embodiment, in the case of the in-wheel servo configuration, the attachment method using the through hole 151 of the main body 15a is adopted as a method for attaching the steering wheel W on the steering servo motor 15. Specifically, the attachment method of inserting the rotation shaft portion 71 of the steering wheel W into the inner hole 70h of the bearing 70 formed in the through hole 151 is adopted.

By adopting the attachment method of the steering wheel W using the through hole 151, the scrub radius corresponding to the distance from the steering rotation axis As to the fastening position of the steering wheel W (the fastening position due to the nut 73 in the present embodiment) can be reduced.

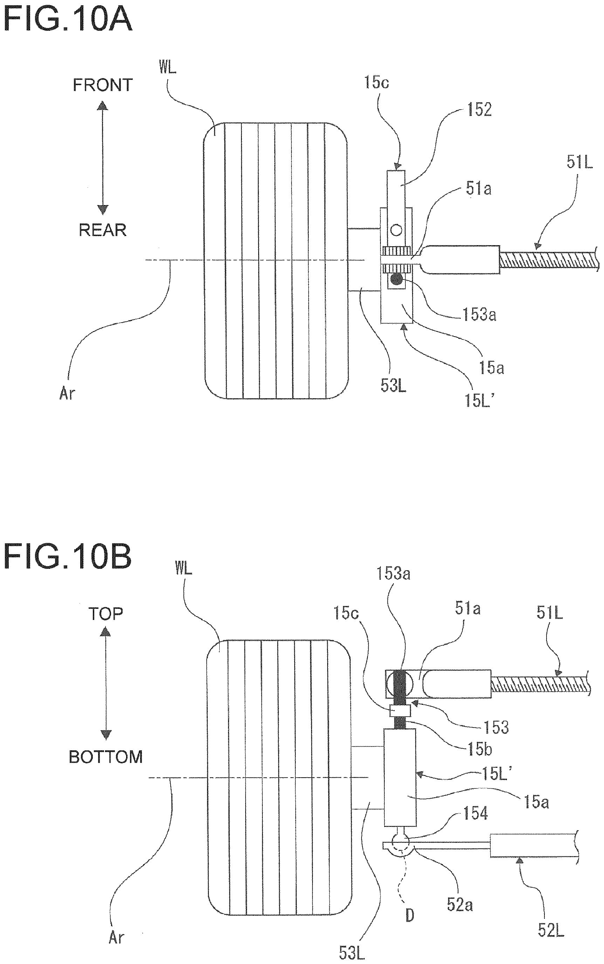

Here, in the in-wheel servo configuration, the steering wheel W can be attached, for example, using a wheel hub portion 53 (53L in the figure) as illustrated in Fig. 10. The wheel hub portion 53 is a mechanism portion that rotatably holds the steering wheel W.

When the steering wheel W is attached to the steering servo motor 15 using the wheel hub portion 53, the wheel hub portion 53 is attached to the side surface (the main surface in the present embodiment) of the main body 15a, and further, the steering wheel W is rotatably attached to the wheel hub portion 53.

Therefore, in the axial direction of the wheel rotation axis Ar, the distance from the steering servo motor 15 to the fastening position of the steering wheel W becomes relatively long, which enhances increase of the scrub radius.

In contrast, as in the present embodiment, in a case where the attachment method of inserting the rotation shaft portion 71 into the bearing 70 provided in the through hole 151 of the main body 15a is adopted, it is not necessary to provide the wheel hub portion 53, and therefore, in the axial direction of wheel rotation axis Ar, the distance from steering servo motor 15 to the fastening position of steering wheel W can be significantly shortened, i.e., the scrub radius can be made shorter than when the wheel hub portion 53 is used.

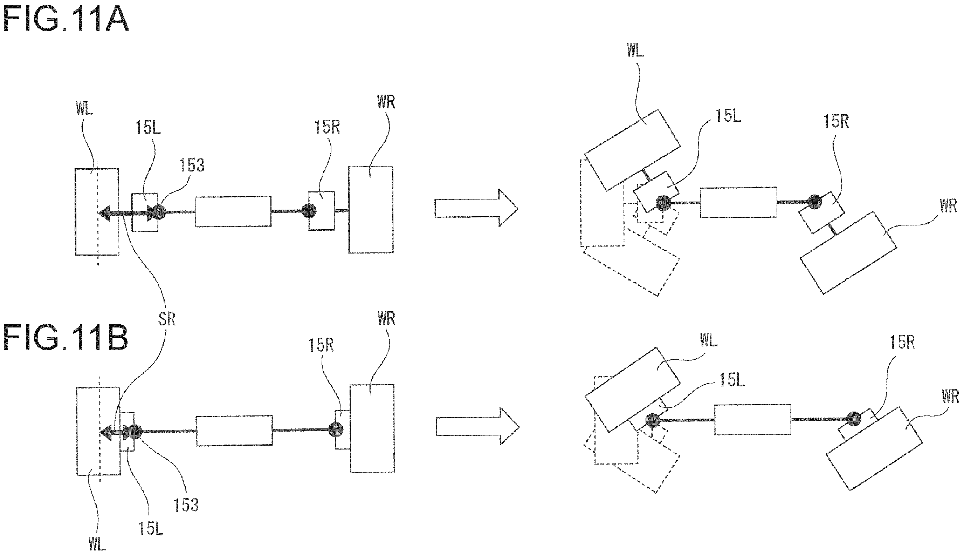

Fig. 11 is an explanatory diagram of the effect obtained by shortening a scrub radius SR. Fig. 11A schematically illustrates rotation of the steering wheels WL, WR where the scrub radius SR is greater. Fig. 11B schematically illustrates rotation of the steering wheels WL, WR where the scrub radius SR is smaller.

In the figure on the left side of Fig. 11A, the length of the black arrow is the scrub radius SR, the right end is the center axis of steering, the left end is at the center line of the steering wheel WL indicated by a dotted line, and the scrub radius SR corresponds to the length of a straight line connecting the center axis of steering and the center line of steering wheel WL. In Fig. 11A, for example, it is assumed that the wheel hub portion 53 is arranged between the steering wheel WL and the steering servo motor 15 as illustrated in Fig. 10, and Fig. 11A is a schematic view in which the center axis of steering, which is the right end, is considered to be the pole portion 153. In this case, when the wheel hub portion 53 is provided, the scrub radius SR increases.

In the figure on the left side of Fig. 11B, the length of the black arrow is the scrub radius SR, the right end is the center axis of steering, the left end is at the center line of the steering wheel WL indicated by a dotted line, and the scrub radius SR corresponds to the length of a straight line connecting the center axis of steering and the center line of steering wheel WL. In Fig. 11B, for example, it is assumed that the attachment method of inserting the rotation shaft portion 71 of the steering wheel W into the inner hole 70h of the bearing 70 formed in the through hole 151 is adopted, i.e., it is assumed that the wheel hub portion 53 is not provided between the steering wheel WL and the steering servo motor 15 as illustrated in Fig. 9. Fig. 11B is a schematic view in which the center axis of steering, which is the right end, is considered to be the pole portion 153. In this case, the wheel hub portion 53 is not provided, and accordingly, the scrub radius SR is shorter than that of Fig. 11A by the size of the wheel hub portion.

As can be seen by comparing these Fig. 11A and Fig. 11B, when, as illustrated in Fig. 11B, the scrub radius SR is made smaller than the scrub radius of Fig. 11A, the amount of change in the position of the steering wheel W when the steering wheel W is rotated can be reduced in the case of Fig. 11B.

Therefore, the scrub radius SR is shortened, so that the accuracy of steering control can be improved. Furthermore, this can provide the operator of the model car 1 with good steering feel.

### <3. Input damping mechanism>

In the present embodiment, in response to adopting a configuration in which the steering servo motor 15 is arranged between the arm portion and the steering wheel W, the configuration of the input damping mechanism has been improved to dampen the input from the road surface via the steering wheel W.

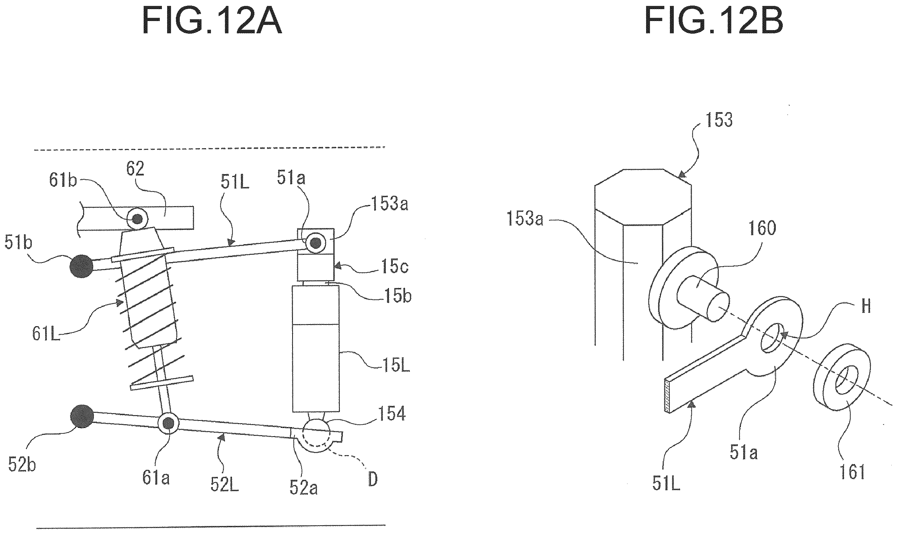

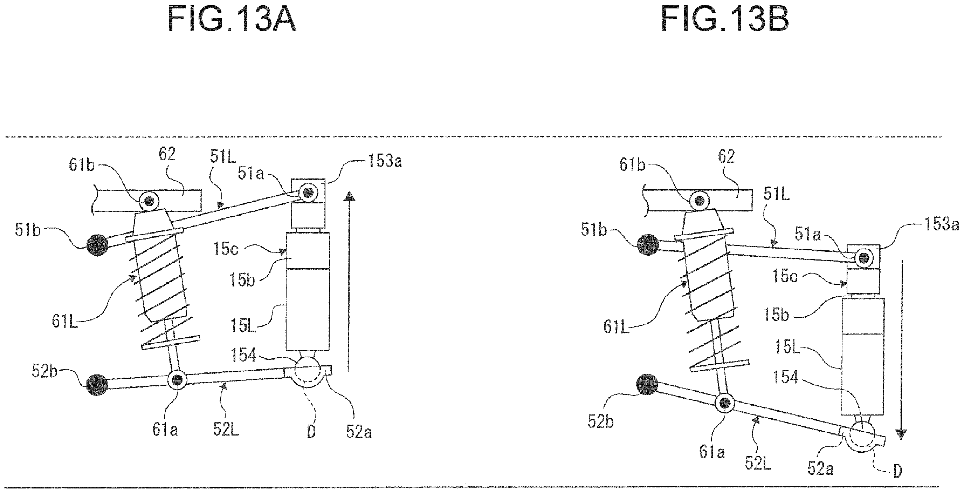

The input damping mechanism provided in the model car 1 according to the embodiment is explained with reference to Fig. 12 and Fig. 13.

In Fig. 12, Fig. 12A is a front view of the vicinity of the left side portion of the steering mechanism 50 (view from the front side of the vehicle). It should be noted that the wheel hub portion 53L and the steering wheel WL are not illustrated.

The model car 1 of the present embodiment is provided with the shock absorber 61L and the shock tower 62 as a configuration for input damping. The shock absorber 61L includes a cylinder portion in which a cushioning material such as a liquid is sealed, and a spring wound around the outer periphery of the cylinder portion, and is constructed in such a way that the shock applied to the spring can be absorbed by the drag force generated by the liquid or gas in the cylinder portion.

The shock tower 62 is a member for connecting the left and right shock absorbers 61 to the chassis 1a.

First of all, in the steering mechanism 50 of the embodiment, the upper arm 51L has a vehicle-side end portion 51b (the aforementioned root portion), i.e., an end opposite to the tip portion 51a, being connected to the chassis 1a so as to enable the upper arm 51L to swing vertically around the vehicle-side end portion 5 1b as the fulcrum. The tip portion 51a of the upper arm 51L is connected to the tip portion 153a of the pole portion 153 so as to enable the upper arm 51L to swing vertically around the tip portion 51a as the fulcrum. Specifically, the tip portion 51a is connected to the output shaft 15b.

Fig. 12B is a perspective view for explaining an example of connection between the tip portion 51a of the upper arm 51L and the tip portion 153a of the pole portion 153. As illustrated in the view, the tip portion 153a has an attachment portion 160 in a substantially cylindrical shape that protrudes toward the front side of the model car 1, and a substantially circular hole portion H through which the attachment portion 160 is inserted is formed in the tip portion 51a of the upper arm 51L. In this case, the tip portion 51a is held between the pole portion 153 and a holding member such as a nut 161, with the hole portion H being inserted into the attachment portion 160.

For example, with this configuration, the upper arm 51L is connected to the tip portion 153a of the pole portion 153 so as to enable the upper arm 51L to swing vertically around the tip portion 51a as the fulcrum.

The lower arm 52L has a vehicle-side end portion 52b, i.e., an end opposite to the tip portion 52a, being connected to the chassis 1a so as to enable the lower arm 52L to swing vertically around the vehicle-side end portion 52b as the fulcrum. The tip portion 52a of the lower arm 52L is connected to the spherical joint 154 so as to enable the lower arm 52L to swing vertically around the tip portion 52a as the fulcrum. Specifically, the tip portion 52a is connected to the main body 15a of the steering servo motor 15L.

As explained above, the spherical portion of the spherical joint 154 slidably fits in the recess D of the lower arm 52L, and accordingly, the lower arm 52L is connected to the main body 15a of the steering servo motor 15L so as to enable the lower arm 52L to swing vertically around the tip portion 52a as the fulcrum.

With the above-described configuration being employed, a lower end portion 61a of the shock absorber 61L is connected to the lower arm 52L, so as to be able to swing vertically around the vehicle-side end portion 52b of the lower arm 52L as the fulcrum, and to be able to swing vertically around the tip portion 52a of the lower arm 52L as the fulcrum. In other words, the lower end portion 61a of the shock absorber 61L is connected to the lower arm 52L so as to enable the lower arm 52L to swing vertically around, as the fulcrum, the connection portion between the lower end portion 61a and the lower arm 52L.

Furthermore, the upper end portion 61b of the shock absorber 61L is connected to the shock tower 62 (i.e., connected to the vehicle body side) without being attached to the upper arm 51L.

The suspension structure described above is what is termed as a double wishbone type suspension structure.

Since the double wishbone type uses parallel links, the camber angle can be prevented from changing even if the steering wheel W moves up and down due to uneven road surfaces.

Fig. 13 is an explanatory diagram, and illustrates, in the same front view as Fig. 12A, steering and input damping mechanism when the steering wheel WL passes a protruding portion of the road surface (Fig. 13A) and when the steering wheel WL passes a recessed portion of the road surface (Fig. 13B). From these Fig. 13A and Fig. 13B, it can be understood that the camber angle of the steering wheel WL does not change due to the unevenness of the road surface.

Also, according to the double wishbone suspension structure described above, the upper end portion 61b of the shock absorber 61 is not connected to the upper arm 51L, and therefore, even if a configuration in which the steering servo motor 15 is inserted between the upper arm 51 and the lower arm 52 is adopted, the input damping operation from the road surface can be prevented from being obstructed.

As described above, it may be possible to adopt a configuration in which the tip portion 51a of the upper arm 51L is connected via the spherical joint 154 to the main body 15a, the tip portion 52a of the lower arm 52L is connected to the output shaft 15b. In this case, in order to provide the double wishbone suspension structure explained above, the upper arm 51L of the tip portion 51a may be connected to the main body 15a so as to enable the upper arm 51L to swing vertically around the tip portion 51a as the fulcrum, and the tip portion 52a of the lower arm 52L may be connected to the output shaft 15b so as to enable the lower arm 52L to swing vertically around the tip portion 52a as the fulcrum.

It should be noted that regarding the input damping mechanism, the configuration on the right side is bilaterally symmetrical to the configuration on the left side, and therefore, explanations thereabout using illustrations are omitted.

### <4. Modified embodiment>

The present invention is not limited to the above-mentioned specific examples, but can be configured as various modified embodiments.

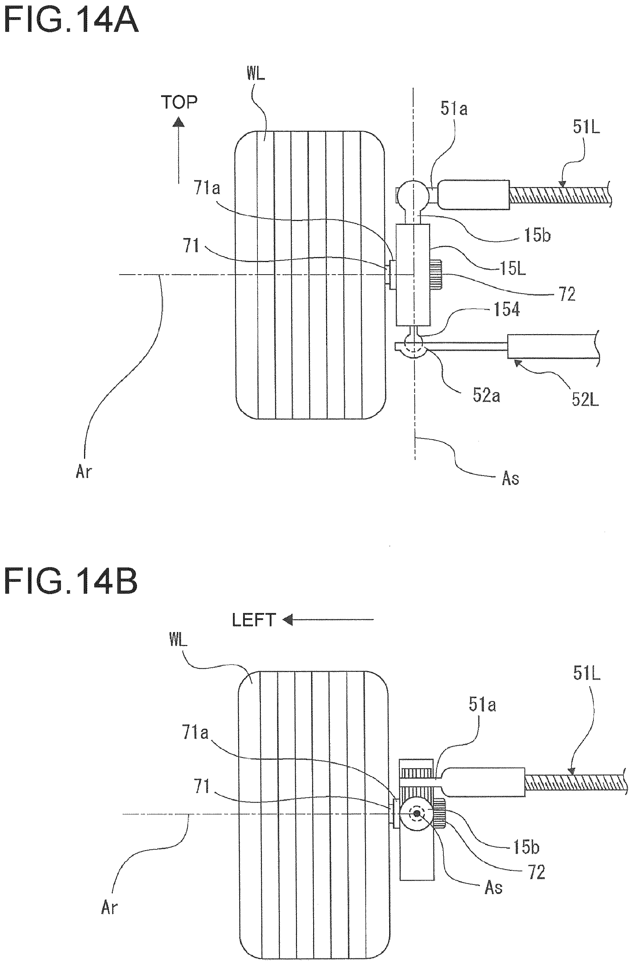

For example, although, in the above explanation, a configuration in which the output shaft 15b is connected via the connection portion 15c to the upper arm 51 is given as an example regarding the connection between the output shaft 15b and the upper arm 51, a configuration in which the tip portion of the output shaft 15b is directly connected to the tip portion 51a of the upper arm 51 may be adopted as in a modified embodiment illustrated in Fig. 14. Specifically, in this case, the tip portion of the output shaft 15b is connected to the tip portion 51a of the upper arm 51 such that the output shaft 15b cannot rotate. Accordingly, similar to the case of adopting the configuration explained in Fig. 8 and the like, a configuration in which the main body 15a and the steering wheel W move in conjunction with each other in response to steering is provided.

Moreover, although, in the above explanation, the example in which the steering mechanism 50 has a bilaterally symmetrical configuration is given, the steering mechanism according to the present invention may include an asymmetrical configuration in at least a portion of the left and right sides.

Furthermore, although, in the above explanation, an example in which the present invention is applied to the model car 1, which is a vehicle with four wheels, is given, the present invention can be suitably applied to a model car that is equipped with one or more steering wheels and has two or more wheels.

Although, in the above explanation, an example in which the present invention is applied to the steering mechanism of the model car is given, the servo motor device and the movable mechanism according to the present invention are not limited to application to the steering mechanism. For example, the present invention may be applied to a movable mechanism as a joint portion of a robot, or a servo motor device used as a driving source for a predetermined component in the movable mechanism.

When a through hole is provided in the main body of the servo motor device even though the present invention is applied to a movable mechanism other than the steering mechanism of the model car and to a servo motor device other than the steering servo motor, the attachment method using the through hole can be employed as the attachment method between the servo motor device and another component. Specifically, not only a method of attaching another component via an outer surface of a servo motor device but also the attachment method for attaching another component via the through hole can be employed.

Therefore, the degree of freedom in attaching the servo motor device and other components in the movable mechanism can be improved.

### <5. Summary of embodiment>

As explained above, a servo motor device of an embodiment (steering servo motor 15) includes:
a main body (15a) including a motor (156);
an output shaft (15b) protruding from the main body and rotatably held by the main body to output power of the motor; and
a through hole (151) penetrating the main body.

Because the above-described through hole is provided, the attachment method using the through hole can be adopted as the attachment method between the servo motor device and another component, when the servo motor device is applied as an actuator in various kinds of movable mechanisms such as, for example, a steering mechanism of a model car or a joint portion of a robot.

Therefore, this provides greater flexibility in the attachment between the servo motor device and another component in the movable mechanism, and the servo motor device that is easy to attach can be provided.

Furthermore, in the servo motor device of the embodiment, the main body is formed in the plate shape, and the through hole penetrates the main body in the thickness direction (see Fig. 5 and Fig. 6 and the like).

This makes it possible to minimize the length of the through hole. In other words, the length of the through hole can be made shorter than when the through hole is formed in a direction perpendicular to the thickness direction of the main body.

Therefore, the decrease in strength of the main body due to the formation of the through hole can be alleviated.

Furthermore, in the servo motor device of the embodiment, the bearing (70) is provided in the through hole.

A rotation body can be rotatably attached to the main body of the servo motor device via the above-described bearing.

Therefore, this is suitable for providing the servo motor device that rotatably holds a predetermined rotation body, such as, for example, a servo motor device that rotatably holds a steering wheel in a steering mechanism of a model car.

Still furthermore, in the servo motor device of the embodiment, the inner hole (70h) that is the hold portion formed on the inner side of the inner ring of the bearing is the rotation shaft portion insertion hole through which the rotation shaft portion (71) of the steering wheel of the model car is inserted.

Accordingly, the servo motor device that rotatably holds the steering wheel in the steering mechanism of the model car can be provided.

Therefore, the in-wheel servo can be provided, and it is possible to eliminate the need for the link mechanism of the steering that is required by steering servo motors provided on the vehicle body side as in a conventional example. Because the need for a steering link mechanism is eliminated, it is possible to alleviate a decrease in the accuracy of steering control caused by a connection backlash in the link mechanism.

Furthermore, because the need for a link mechanism is eliminated, it is possible to prevent the rotation angle of the steering wheel from changing depending on the steering angle. Therefore, the accuracy of steering control can be improved in these aspects.

Furthermore, because the need for a link mechanism is eliminated, the steering wheel can be rotated 180 degrees.

Furthermore, according to the above configuration, the need for a link mechanism is eliminated, and the left and right steering wheels can be independently steered and driven. This makes it possible to electrically adjust the Ackermann ratio by adjusting of the rotation angle of the steering servo motor (in other words, adjustment can be made while the model car is running).

Here, the Ackermann ratio means the difference in steering angle between the left and right steering wheels. If the steering angles of the left and right steering wheels are the same for a certain amount of steering, the left and right steering wheels will draw a circle with the same radius.

In this case, the center of the arc drawn by the outside steering wheel and the center of the arc drawn by the inside steering wheel are different by the width of the vehicle, and accordingly, the track of the outside steering wheel and the track of the inside steering wheel intersect at a certain point, so that the track of the outside steering wheel goes inside of the track of the inside steering wheel. As can be understood from this, if the steering angles of the left and right steering wheels are the same, it will be difficult to turn the model car smoothly.

Therefore, the turning angle of the left and right steering wheels are adjusted, as adjustment of the Ackermann ratio, in order to achieve desired steering characteristics of a model car, for example, allowing the model car to turn smoothly.

Furthermore, according to the above configuration, the rotation angles of the left and right steering wheels can be adjusted independently, as compared with a steering mechanism in which the left and right steering wheels are rotationally driven by the output of a single servo motor as in the configuration illustrated in Fig. 6 of Patent Document 1. Furthermore, because the rotation angles of the left and right steering wheels can be adjusted independently, the toe angles can be electrically adjusted while the model car is running.

Furthermore, because the rotation shaft portion can be inserted into the inner hole of the bearing, the scrub radius can be made smaller than in the case where, for example, a main body and steering wheels are connected through a wheel hub portion that rotatably holds the steering wheels. Because the scrub radius is reduced, the accuracy of steering control can be improved. Furthermore, the scrub radius can be easily adjusted by using wheel spacers.

Furthermore, because the servo motor device also serves as the wheel hub portion, this eliminates the need for a wheel hub, which reduces the number of components and reduces the unsprung weight, improving the maneuverability of the model car.

Furthermore, a movable mechanism of an embodiment (steering mechanism 50) includes:
a servo motor device (steering servo motor 15) that includes:
   a main body including a motor;
   an output shaft protruding from the main body and rotatably held by the main body to output power of the motor; and
   a through hole penetrating the main body, and
a driven portion (steering wheel W, rotation shaft portion 71) that is driven based on the power of the motor.

With such a movable mechanism, the same effects as those described above can be obtained for the servo motor device.

Therefore, the movable mechanism of which the servo motor device is easy to attach can be provided.

Furthermore, in the movable mechanism of the embodiment, the main body is formed in the plate shape, and the through hole penetrates the main body in the thickness direction

This makes it possible to minimize the length of the through hole.

Therefore, the decrease in strength of the main body due to the formation of the through hole can be alleviated.

Furthermore, in the movable mechanism of the embodiment, the bearing is provided in the through hole.

A rotation body can be rotatably attached to the main body of the servo motor device via the above-described bearing.

Therefore, it is possible to provide the movable mechanism that rotatably holds a predetermined rotation body with the servo motor device, such as, for example, a steering mechanism of a model car that rotatably holds a steering wheel with a servo motor device for steering and driving the steering wheel.

Still furthermore, the movable mechanism of the embodiment is configured as a steering mechanism of a model car, and the rotation shaft portion of the steering wheel of the model car is inserted through the inner hole that is the hold portion formed on the inner side of the inner ring of the bearing.

Accordingly, the in-wheel servo can be provided for the steering mechanism of the model car.

Therefore, the in-wheel servo can be provided, and it is possible to eliminate the need for the link mechanism of the steering that is required by steering servo motors provided on the vehicle body side as in a conventional example. Because the need for a steering link mechanism is eliminated, it is possible to alleviate a decrease in the accuracy of steering control caused by a connection backlash in the link mechanism. Furthermore, because the need for a link mechanism is eliminated, it is possible to prevent the rotation angle of the steering wheel from changing depending on the steering angle. Therefore, the accuracy of steering control can be improved in these aspects.

Furthermore, because the need for a link mechanism is eliminated, the steering wheel can be rotated 180 degrees, and the Ackermann ratio can be electrically adjusted by adjusting of the rotation angle of the steering servo motor (in other words, adjustment can be made while the model car is running).

Furthermore, according to the above configuration, the rotation angles of the left and right steering wheels can be adjusted independently, as compared with a steering mechanism in which the left and right steering wheels are rotationally driven by the output of a single servo motor as in the configuration illustrated in Fig. 6 of Patent Document 1. Furthermore, because the rotation angles of the left and right steering wheels can be adjusted independently, the toe angles can be electrically adjusted while the model car is running.

Furthermore, because the rotation shaft portion can be inserted into the inner hole of the bearing, the scrub radius can be made smaller than in the case where, for example, a main body and steering wheels are connected through a wheel hub portion that rotatably holds the steering wheels.

Because the scrub radius is reduced, the accuracy of steering control can be improved.

Furthermore, the scrub radius can be easily adjusted by using wheel spacers.

Furthermore, because the servo motor device also serves as the wheel hub portion, this eliminates the need for a wheel hub, which reduces the number of components and reduces the unsprung weight, improving the maneuverability of the model car.

Furthermore, in the movable mechanism of the embodiment, the servo motor device is located between an arm portion and the steering wheel, the arm portion extending from a vehicle body side to the steering wheel of the model car, the arm portion includes a first arm portion and a second arm portion separated in a vertical direction, the output shaft is unrotatably supported by either one of the first arm portion or the second arm portion, and the main body is supported by either one of the first arm portion or the second arm portion that is not supporting the output shaft, such that the main body can freely rotate around the output shaft as a central axis.

As described above, when the output shaft is unrotatably supported by either one of the upper or lower arm portion, and the main body is supported by the other of the upper or lower arm portion, such that the main body can freely rotate around the output shaft as a central axis, the main body rotates around the output shaft in response to steering in this movable mechanism. Since the rotation shaft portion of the steering wheel is connected to the main body via the bearing, the steering wheel rotates in conjunction with the rotation of the main body in response to steering.

Therefore, according to the above configuration, when the configuration in which the scrub radius is shortened by connecting the rotation shaft portion of the steering wheel to the bearing formed in the through hole of the main body is adopted, the steering wheel can be rotated appropriately using the servo motor device as a driving source.

Furthermore, in the movable mechanism of the embodiment, the rotation shaft portion has a root-side end portion that is an end portion, from among both end portions of the rotation shaft portion, inserted into the inner hole of the bearing, and the movable mechanism is such that a cap member (bolt 72) is latched to the root-side end portion, the cap member having a portion with a greater diameter than that of the root-side end portion.

As described above, the cap member latched to the root-side end portion of the rotation shaft portion can prevent the steering wheel from being displaced in a direction away from the servo motor device due to road resistance applied to the steering wheel.

Therefore, it is possible to prevent the steering wheel and the rotation shaft portion from detaching from the model car.

### <6. Other examples of configurations of main body>

In the above explanation, the main body 15a of the steering servo motor 15 includes the through hole 151 for attaching the rotation shaft portion 71 of the steering wheel W, but it is not necessary to form the through hole 151 in the main body in order to attach a member (hereinafter referred to as a "mounting member"), such as the rotation shaft portion 71, for attaching another component to the servo motor device.

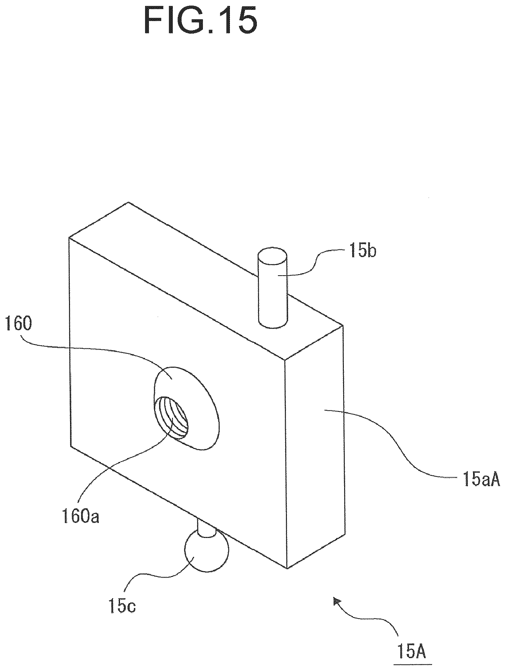

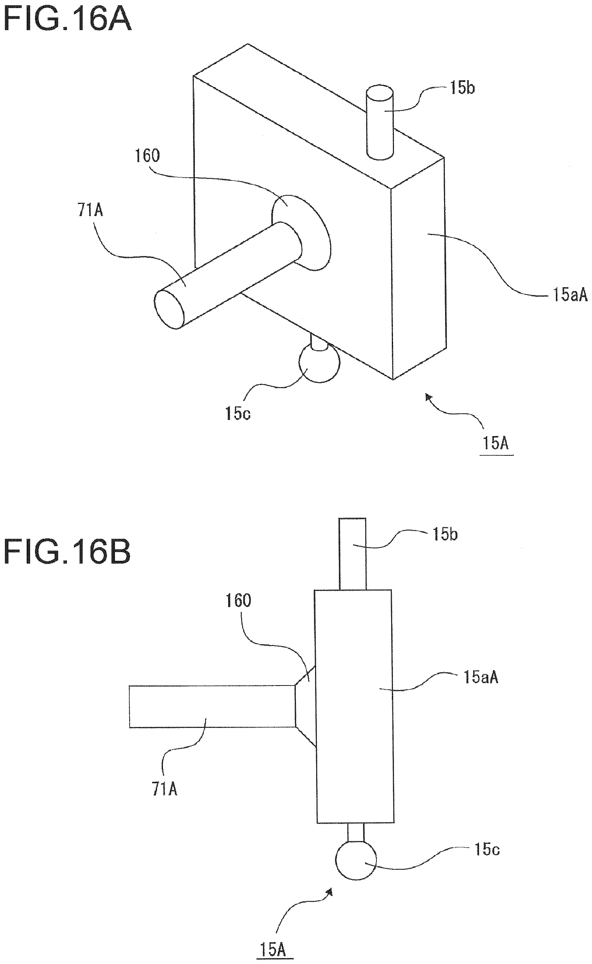

For example, as illustrated in Fig. 15 and Fig. 16, the steering servo motor 15A formed with the attachment portion 160 for attaching the mounting member can be suggested.

In the following explanations, portions that are similar to the portions that have already been explained are denoted with the same reference symbol and the explanation thereabout is omitted.

Fig. 15 is a perspective view of a steering servo motor 15A. Fig. 16 is a diagram illustrating a state in which a mounting member (a rotation shaft portion 71A in this case) is attached to the steering servo motor 15A.

As illustrated in Fig. 15, the steering servo motor 15A includes a main body 15aA, for example, on a side surface of which an attachment portion 160 is formed. As illustrated, the attachment portion 160 is provided so as to protrude to the side of the main body 15aA.

In this case, the through hole 151 is not formed in the main body 15aA.

In the present embodiment, the attachment portion 160 has a mounting port 160a formed with a threaded groove into which the rotation shaft portion 71A serving as a mounting member is screwed.

It should be noted that the attachment portion 160 may be integrated with the main body 15aA, or may be fixed to the main body 15aA as a separate member by adhesive or other means.

Although not illustrated, the rotation shaft portion 71A has a thread for screw attachment formed at the end opposite to the end to which the steering wheel W is attached. Accordingly, as illustrated in Fig. 16A and Fig. 16B, the rotation shaft portion 71A can be attached to the main body 15aA by screw attachment.

When the rotation shaft portion 71A is attached via the attachment portion 160 as described above, a bearing is provided on the side of the steering wheel W. That is, a configuration in which the tip portion of the rotation shaft portion 71A (the end opposite to the end attached to the attachment portion 160) is attached to the steering wheel W via the bearing is adopted.

In this case, even if the steering wheel W rotates, the rotation shaft portion 71A does not rotate. However, since the rotation shaft portion 71A is arranged at a position that becomes the rotation axis of the steering wheel W, the term "rotation shaft portion" is used here.

According to the above configuration, there is no need to form the through hole 151 in the main body of the servo motor device, and accordingly, there is no need to secure a space for the through hole 151 in the main body, and the servo motor device can be made smaller. Furthermore, layout constraints of the internal components of the servo motor device due to the provision of the through hole 151 can be alleviated, and the degree of flexibility in designing the servo motor device can be improved.

It should be noted that the attachment method of the rotation shaft portion 71A to the main body 15aA is not limited to attachment with threads, and other methods such as attachment using adhesives or screws can also be used, and the attachment method is not limited to a specific method.

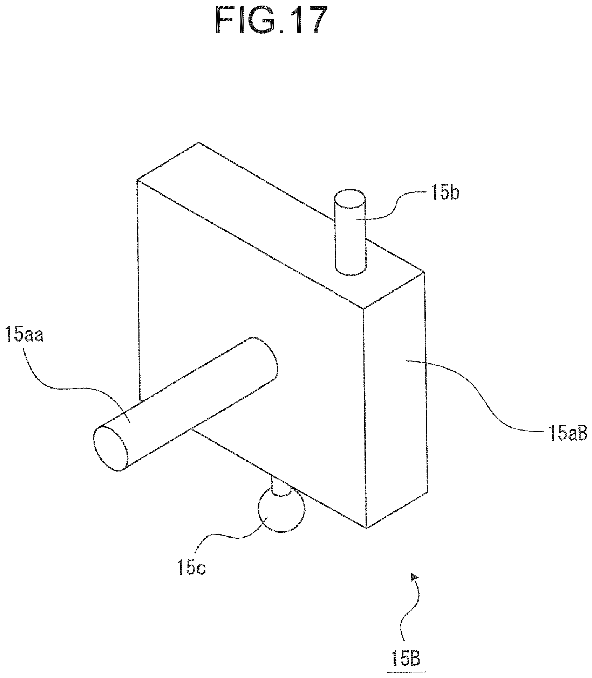

Here, as a configuration in which the through hole 151 for attaching the mounting member is not formed in the main body of the servo motor device, there is also a configuration of a steering servo motor 15B in which a mounting member (a rotation shaft portion 15aa in the figure) is integrally formed as illustrated in Fig. 17.

As illustrated in the figure, a main body 15aB of the steering servo motor 15B is integrally formed with, for example, the rotation shaft portion 15aa that protrudes from the side.

In this case as well, similar to the configurations illustrated in Fig. 15 and Fig. 16, the tip portion of the mounting member as rotation shaft portion 15aa is attached to the steering wheel W via a bearing.

When the configuration illustrated in Fig. 17 is adopted, the mounting member (the rotation shaft portion 15aa) can be integrally molded with the main body 15aB, so that the costs can be reduced by reducing the number of components.

The configurations illustrated in Fig. 15 to Fig. 17 can also be applied to applications other than the steering mechanism of a model car. In that case, in the configuration illustrated in Fig. 15 and Fig. 16, the formation position of the attachment portion 160 is not limited to the side surface of the main body 15aA, and may be any other position as long as it is possible to prevent interference between another component connected via the mounting member attached to the attachment portion 160 and the output shaft 15b or the component driven by the output shaft 15b. Likewise, in the configuration illustrated in Fig. 17, the formation position of the mounting member illustrated as the rotation shaft portion 15aa is not limited to the side surface of the main body 15aB, and may be any other position as long as it is possible to prevent interference between another component connected via the mounting member and the output shaft 15b or the component driven by the output shaft 15b.

Also, when applications other than steering mechanisms are considered, it is also possible that a component connected via the mounting member have power, and in that case, the main body 15aA or the main body 15aB may be revolved or rotated.

In this case, when applications other than steering mechanisms are considered, there are many possible shapes for the mounting member. For example, possible shapes for the mounting member include: cylindrical or columnar shapes such as those of the rotation shaft portion 71A and the rotation shaft portion 15aa; cubic and rectangular parallelepiped shapes and spherical shapes; and shapes that are combinations of different shapes, such as a shape with a part being columnar and a part being spherical.

### Description of Symbols

1 model car
15(15L, 15R), 15A, 15B steering servo motor
W(WL, WR) steering wheel
Wh center hole
50 steering mechanism
51(51L, 51R) upper arm
52(52L, 52R) lower arm
51a, 52a tip portion
51b, 52b vehicle-side end portion
53(53L, 53R) wheel hub portion
61(61L, 61R) shock absorber
62 shock tower
61a lower end portion
61b upper end portion
70 bearing
70h inner hole
71(71L, 71R), 71A rotation shaft portion
71a flange portion
71b tip portion
71c root portion
71d stepped portion
71h hole portion
72 bolt
73 nut
15a main body
15aa rotation shaft portion
15b output shaft
15c connection portion
15d support portion
151 through hole
152 plate-shaped portion
153 pole portion
153a tip portion
154 spherical joint
156 motor
157 reduction mechanism
158 angle detection unit
159 circuit board
160 attachment portion
160a mounting port
D recess
Ar wheel rotation axis
As steering rotation axis

## Claims

1. A servo motor device comprising:
a main body including a motor;
an output shaft protruding from the main body and rotatably held by the main body to output power of the motor; and
a through hole penetrating the main body.

2. The servo motor device according to claim 1, wherein the main body is in a plate shape, and the through hole penetrates the main body in a thickness direction.

3. The servo motor device according to claim 1 or 2, wherein the through hole has a bearing inside thereof.

4. The servo motor device according to claim 3, wherein the bearing has an inner ring, and an inner hole that is a hole portion formed inside of the inner ring is a rotation shaft portion insertion hole into which a rotation shaft portion of a steering wheel of a model car is inserted.

5. A movable mechanism comprising:
a servo motor device; and
a driven portion,
wherein the servo motor device includes:
a main body including a motor;
an output shaft protruding from the main body and rotatably held by the main body to output power of the motor; and
a through hole penetrating the main body, and
wherein the driven portion is driven based on the power of the motor.

6. The movable mechanism according to claim 5, wherein the main body is in a plate shape, and
the through hole penetrates the main body in a thickness direction.

7. The movable mechanism according to claim 5 or 6, wherein the through hole has a bearing inside thereof.

8. The movable mechanism according to claim 7, wherein the movable mechanism is configured as a steering mechanism of a model car,
the bearing has an inner ring, and
a rotation shaft portion of a steering wheel of the model car is inserted into an inner hole that is a hole portion formed inside of the inner ring.

9. The movable mechanism according to claim 8, wherein the servo motor device is located between an arm portion and the steering wheel, the arm portion extending from a vehicle body side to the steering wheel of the model car,
the arm portion includes a first arm portion and a second arm portion separated in a vertical direction,
the output shaft is unrotatably supported by the arm portion of either the first arm portion or the second arm portion, and
the main body is supported by the arm portion of either the first arm portion or the second arm portion that is not supporting the output shaft, such that the main body can freely rotate around the output shaft as a central axis.

10. The movable mechanism according to claim 8 or 9, wherein the rotation shaft portion has a root-side end portion that is an end portion inserted into the inner hole of the bearing, and
the movable mechanism is such that a cap member is latched to the root-side end portion, the cap member having a portion with a greater diameter than that of the root-side end portion.
